# FASCICULE DE BREVET EUROPEEN

(11) **EP 3 390 181 B1**
(45) Date de publication et mention de la délivrance du brevet: **30.03.2022**
(21) Numéro de dépôt: 16809828.3
(22) Date de dépôt: 14.12.2016
(51) Int. Cl.: B60T 13/74, B60T 7/04, B60T 13/66

(54) **PROCEDE DE COMMANDE D'UN SYSTEME DE FREINAGE APTE A REALISER LA FONCTION FREIN DE PARKING**
VERFAHREN ZUR STEUERUNG EINES BREMSSYSTEMS ZUR DURCHFÜHRUNG DER FESTSTELLBREMSFUNKTION
METHOD FOR CONTROLLING A BRAKING SYSTEM CAPABLE OF CARRYING OUT THE PARKING BRAKE FUNCTION

(30) Priorité: 15.12.2015 FR 1562385
(43) Date de publication de la demande: 24.10.2018
(73) Titulaire: Hitachi Astemo France, 93700 Drancy (FR)
(72) Inventeur: WITTE, Lennart, 95600 Eaubonne (FR); GHESQUIERE, Benoit, 60440 Nanteuil Le Haudouin (FR); HURWIC, Aleksander, 75020 Paris (FR)
(74) Mandataire: Brevalex
(86) Numéro de dépôt international: PCT/EP2016/081048
(87) Numéro de publication internationale: WO 2017/102869

(56) Documents cités:
- US-A1- 2011 224 880
- US-A1- 2013 333 988
- US-A1- 2015 217 738

## Description

### DOMAINE TECHNIQUE

L'invention se rapporte à un procédé pour la commande d'un système de freinage apte à réaliser la fonction frein de parking pour un véhicule automobile, notamment pour la commande d'un frein de parking comportant des moyens électriques d'entraînement

L'invention se rapporte plus particulièrement à un procédé de commande d'un système de freinage permettant de compenser d'éventuelles défaillances de la partie électrique du frein.

### ÉTAT DE LA TECHNIQUE ANTÉRIEURE

Un véhicule automobile moderne est aujourd'hui équipé d'un système de commande électrique du freinage qui a pour but d'activer des fonctions de freinage qui sont indépendantes de l'actionnement par le conducteur du véhicule. De telles fonctions sont les fonctions de frein automatiques, tels que le contrôle d'entraînement de patinage (ASR) ou dynamique de conduite de contrôle (ESP) (Electronique Stability Program ou programme de stabilité électronique) à effectuer en outre la fonction de commande antiblocage (ABS), ou la fonction de frein de stationnement qui permet aussi au véhicule de se tenir immobile lorsque le conducteur est absent et aussi sur une route avec une pente.

Ces moyens mécaniques comportent notamment des moyens électriques qui agissent sur le circuit hydraulique d'entraînement de piston du système de frein qui complètent l'action des moyens mécaniques sur le circuit hydraulique, en cas de défaillance de ces derniers.

Le document US-7.744.166 décrit un procédé de commande d'un tel frein de parking, qui consiste à exercer l'action de freinage par les moyens mécaniques puis à compléter cette action par les moyens hydrauliques, lorsque l'action des moyens mécaniques est insuffisante.

US 2011/224880 divulgue un procédé dans lequel la force de freinage supplémentaire est générée par un dispositif de freinage supplémentaire dans le cas où la force de serrage électromotrice n'atteint pas une force de préhension cible requise.

US 2013/333988 divulgue un procédé dont la force de serrage est produite partiellement par un actionneur électrique du frein de stationnement électromécanique. Une pression d'assistance à produire dans le dispositif de freinage hydraulique est augmentée par rapport à une pression de coupure correspondant à la force de serrage hydraulique à un point de coupure, lorsque la force de serrage est produite par un actionneur électrique du frein de stationnement électromécanique.

US 2015/217738 divulgue un procédé pour fournir une force de serrage générée par un frein de stationnement automatique utilisé dans un véhicule à moteur, impliquant la génération d'une force de serrage par un piston de frein agissant sur un disque de frein et un moteur de frein.

Un tel procédé est particulièrement complexe puisqu'il nécessite de déterminer l'amplitude de chacune des actions de freinage exercées par les moyens hydrauliques et mécaniques, puis de moduler celles-ci.

### EXPOSÉ DE L'INVENTION

L'invention a principalement pour objet, selon la revendication 1, un procédé (10) de commande d'un système de freinage pour véhicule automobile qui est apte à mettre en œuvre une fonction de frein de parking, le système de freinage comportant notamment un disque, un étrier de frein et au moins un piston mobile et qui coopère avec l'étrier pour exercer sur le disque un effort de serrage du disque, le système de freinage comportant en outre des moyens électriques et des moyens hydrauliques pour l'entrainement du piston afin de produire un effort de serrage du disque, le procédé (10) comportant une étape (16) de détermination si la puissance que les moyens électriques sont aptes à produire est suffisamment importante pour réaliser un blocage du disque dans lequel lorsqu'à l'issue de l'étape de détermination (16), il a été déterminé que les moyens électriques sont aptes à produire une puissance suffisamment importante pour réaliser un blocage du disque, l'étape de détermination (16) est suivie d'une étape (20) d'actionnement des seuls moyens électriques pour exercer un effort de serrage du disque,dans lequel lorsqu'à l'issue de l'étape de détermination (16), il a été déterminé que les moyens électriques ne sont pas aptes à produire une puissance suffisamment importante pour réaliser un blocage du disque, l'étape de détermination (16) est suivie d'une étape (26) d'actionnement des moyens hydrauliques qui consiste à exercer sur le piston un effort de serrage, qui est suivie par une étape (20) d'actionnement des moyens électriques.

L'actionnement des moyens hydrauliques antérieurement à l'actionnement des moyens mécaniques permet d'exercer la totalité de l'action de freinage qu'ils peuvent exercer. Il n'y a donc pas nécessairement à réguler ceux-ci. Il en résulte que le procédé de commande est plus simple à mettre en œuvre et donc il est plus efficace.

De préférence, l'étape de détermination comporte une phase de mesure de l'effort de freinage apte à être exercé à par les moyens électriques d'entrainement.

De préférence, l'étape de détermination comporte une phase de mesure d'une valeur caractéristique d'un circuit d'alimentation électrique du véhicule, circuit incluant la batterie.

De préférence, la valeur électrique mesurée est une tension électrique.

De préférence, la valeur électrique mesurée est une énergie susceptible d'être délivrée aux moyens d'actionnement électrique.

De préférence, la valeur électrique mesurée est une puissance disponible.

De préférence, le procédé comporte une étape préliminaire d'actionnement des moyens électriques qui est mise en œuvre avant les étapes d'actionnement des moyens électriques et des moyens hydrauliques.

L'invention a aussi pour objet, selon la revendication 8, un système de freinage pour véhicule automobile comportant un frein comprenant un piston d'application de plaquette de frein sur un disque, des moyens hydrauliques d'entraînement du piston pour les freinages de service, des moyens électriques d'entraînement du piston pour le freinage de parking, une source délivrant, sur commande, du liquide de frein sous pression audit piston un calculateur de commande et une batterie, assurant, sur commande, l'alimentation électrique des moyens électriques d'entraînement du piston, caractérisé en ce qu'il comporte des moyens de détection de la défaillance de la batterie, et des moyens de commande d'activation des moyens hydrauliques suivis par une activation des moyens électriques d'entraînement du piston lors de l'activation du frein de parking, et en ce qu'il est configuré pour mettre en œuvre le procédé selon la revendication 1.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est un diagramme représentant les étapes successives du procédé selon l'invention ; et
- la figure 2 est un diagramme représentant une variante du procédé selon l'invention ;
- les figures 3 et 4 sont des diagrammes représentant un autre mode de réalisation des deux variantes représentées aux figures 1 et 2.

### EXPOSÉ DÉTAILLÉ DE MODES DE RÉALISATION PARTICULIERS

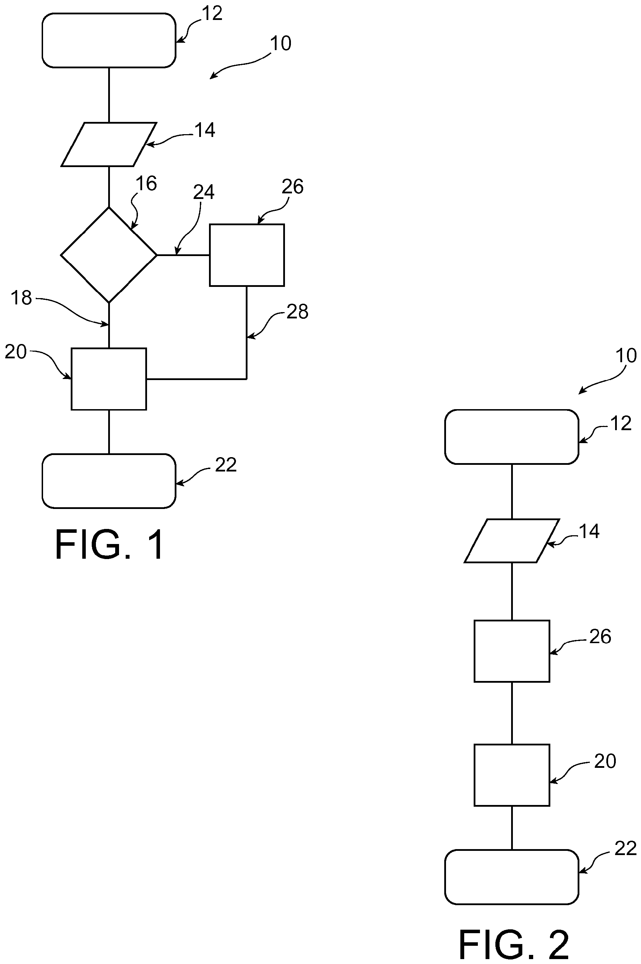

On a représenté à la figure 1 un procédé 10 de commande d'un système de freinage permettant d'assurer la fonction de frein de parking d'un véhicule automobile.

Le système de freinage est un système de frein à disque comportant notamment un disque de frein solidaire d'une roue du véhicule, un étrier mobile par rapport au disque de frein et au moins un piston mobile par rapport à l'étrier, qui sont reliés à la structure du véhicule et qui sont aptes à serrer le disque pour limiter ou empêcher la rotation du disque par rapport à la structure du véhicule.

Le piston est entraîné en déplacement par rapport à l'étrier par des moyens hydrauliques d'entraînement, par lesquels un fluide exerce une pression sur le piston, et des moyens électriques d'entraînement, qui utilisent une source d'énergie électrique, telle que la batterie du véhicule, pour l'entraînement du piston.

Les moyens électriques d'entraînement comportent notamment un actionneur électrique tel qu'un moteur qui est relié à la source d'électricité du véhicule, c'est à dire la batterie du véhicule, et un dispositif mécanique de transmission qui relie l'actionneur au piston, pour l'entrainement du piston par l'actionneur vers le disque pour exercer l'effort de serrage requis.

Une fois cet effort atteint, le moteur n'est plus alimenté et le dispositif mécanique de transmission maintient le piston dans la position pour laquelle l'effort de serrage requis est exercé et maintenu tel quel. Cela permet d'avoir un système de freinage n'utilisant pas d'énergie pour être maintenu en l'état.

Le système de freinage est apte à mettre en œuvre la fonction de frein de parking, qui consiste à serrer le disque de frein par l'étrier et le piston avec une force de serrage suffisamment importante pour que le véhicule reste immobile, quelles que soient les conditions d'environnement du véhicule.

Cette fonction de frein de parking est de préférence mise en œuvre par les moyens électriques d'entrainement puisqu'ils ne consomment pas d'énergie une fois que le disque de frein est serré avec la force de serrage requise.

Cependant, en cas de défaillance, notamment une défaillance du moteur électrique ou une baisse de l'énergie électrique disponible par la batterie, les moyens électriques d'entrainement ne sont pas capables de produire à eux seuls un effort de serrage du disque de frein suffisamment important pour maintenir le véhicule immobile.

Dans ce cas, il est connu d'utiliser les moyens hydrauliques d'entrainement et les moyens électriques d'entrainement pour exercer ensemble l'effort de serrage du disque de frein.

Le système de freinage est commandé par une unité centrale de commande, par exemple le calculateur de l'unité ESP qui met en œuvre un procédé 10 qui sera décrit par la suite, et qui est mis en œuvre dès qu'une commande de mise en action du frein de parking est émise. Un tel procédé 10 est représenté schématiquement à la figure 1.

Le procédé comporte une phase 12 d'initialisation suivie d'une étape 14 de commande de mise en œuvre de la fonction de frein de parking.

Cette étape de commande 14 est suivie d'une étape 16 de détermination si une valeur électrique que les moyens électriques sont aptes à délivrer sur le piston est suffisamment importante pour réaliser un blocage en rotation du disque. Cette valeur électrique est par exemple la puissance ou la tension apte à être délivrée par les moyens électriques.

Cette étape de détermination 16 comporte par exemple une phase de mesure de la puissance ou de l'effort de freinage apte à être produit par les moyens électriques d'entrainement ou bien une étape de mesure de la puissance électrique, ou de la tension, qui est apte à être fournie aux moyens électriques d'entrainement, à partir de la batterie du véhicule.

A l'issue de cette étape de détermination 16, et comme on peut le voir par le lien 18, si il a été déterminé que l'effort de freinage que les moyens électriques sont aptes à produire, est celui, désiré, alors, une étape 20 d'actionnement des moyens électriques est mise en œuvre. En effet, les moyens électriques d'entrainement sont alors suffisants à eux seuls pour produire l'effort de serrage du disque de frein, l'utilisation des moyens hydrauliques d'entrainement n'est alors pas nécessaire. Ce déroulement du procédé 10 correspond à un fonctionnement normal du système de freinage

Cette étape d'actionnement 20 est ensuite suivie d'une étape 22 de fin du procédé 10, qui est mise en œuvre lorsque l'effort de freinage a été exercé.

A l'issue de l'étape de détermination 16, et comme on peut le voir par le lien 24, dans le cas d'un fonctionnement dégradé du système de freinage, il a été déterminé que l'effort de freinage que les moyens électriques sont aptes à produire, ou bien la puissance ou la tension électrique apte à être fournie aux moyens électriques, n'est pas suffisant, l'étape 16 de détermination est alors suivie par une étape 26 d'actionnement des moyens hydrauliques d'entrainement.

Lors de cette étape 26 d'actionnement, les moyens hydrauliques d'entrainement exercent sur le piston un effort qui est généralement inférieur à l'effort qui est requis pour la fonction de frein de parking.

Ainsi, comme on peut le voir par le lien 28, l'étape 26 d'actionnement des moyens hydrauliques d'entrainement est suivie de l'étape 20 d'actionnement des moyens électriques pour exercer un effort de serrage supplémentaire qui complète l'effort exercé par les moyens hydrauliques d'entrainement.

Cette étape 20 d'actionnement des moyens électriques est ici aussi suivie de l'étape 22 de fin du procédé.

On a représenté à la figure 2 un diagramme représentatif d'une variante de réalisation du procédé selon laquelle l'étape 26 d'actionnement des moyens hydrauliques est systématiquement mise en œuvre avant l'étape 20 d'actionnement des moyens électriques.

Un procédé selon une telle variante de réalisation est plus simple à mettre en œuvre puisqu'il ne comporte pas d'étape 16 de détermination de la puissance que les moyens électriques sont aptes à exercer.

Selon une variante de réalisation, le procédé comporte une première étape d'actionnement 30 des moyens électriques, qui est mise en œuvre immédiatement après l'étape de commande 14.

Ce premier actionnement des moyens électriques permet de produire un effort de freinage initial sur le disque, dans certains cas de fonctionnement du système de freinage, qui est inférieur à l'effort de freinage requis pour réaliser le frein de parking.

L'étape de premier actionnement est ensuite suivie de l'étape de détermination 16, pour déterminer quelle est l'amplitude de l'effort de freinage qui a été obtenu par le premier actionnement des moyens électrique et quelle est l'amplitude de l'effort de freinage qu'ils peuvent encore exercer, le cas échéant. Cette étape de détermination est similaire à celle décrite en référence aux modes de réalisation représentés aux figures 1 et 2 et comporte une phase de mesure de la puissance ou de l'effort de freinage apte à être produit par les moyens électriques d'entrainement ou bien une étape de mesure de la puissance électrique, ou de la tension, qui est apte à être fournie aux moyens électriques d'entrainement, à partir de la batterie du véhicule.

La suite du déroulement du procédé selon cette variante de réalisation est similaire aux modes de réalisation décrits précédemment.

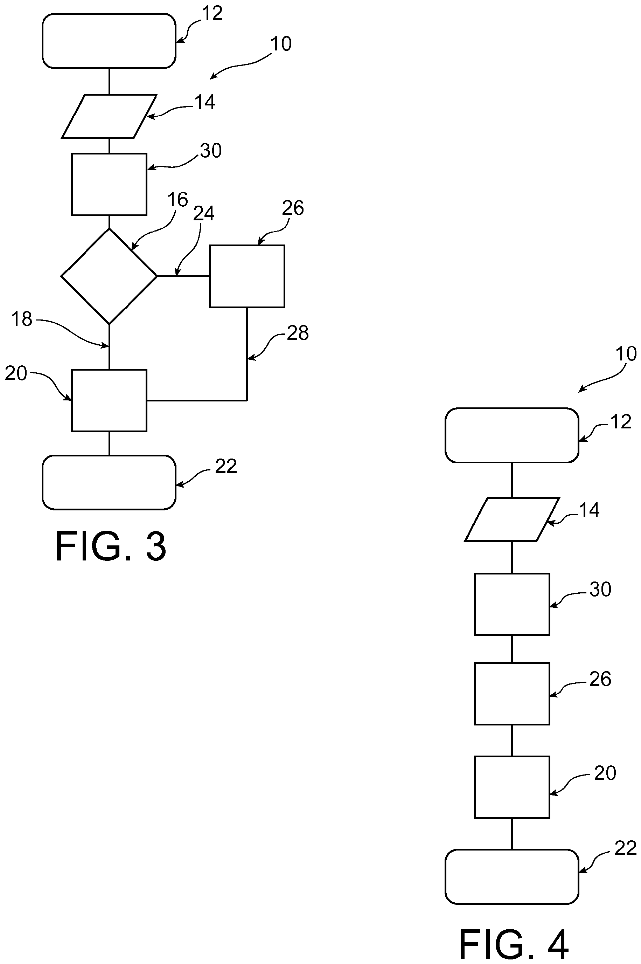

Ainsi, selon le mode de réalisation représenté à la figure 3, dans le cas d'un fonctionnement normal du système de freinage, il a été déterminé que l'effort de freinage que les moyens électriques sont aptes à produire, est celui, désiré, l'étape de détermination 16 est alors suivie par l'étape 20 d'actionnement supplémentaire des moyens électriques.

Par contre, dans le cas d'un fonctionnement dégradé du système de freinage, il a été déterminé que l'effort de freinage que les moyens électriques sont aptes à produire, ou bien la puissance ou la tension électrique apte à être fournie aux moyens électriques, n'est pas suffisant, l'étape 16 de détermination est alors suivie par une étape 26 d'actionnement des moyens hydrauliques d'entrainement puis de l'étape 20 d'actionnement des moyens électriques pour exercer un effort de serrage supplémentaire qui complète l'effort exercé par les moyens hydrauliques d'entrainement.

Aussi, selon le mode de réalisation représenté à la figure 4, l'étape 26 d'actionnement des moyens hydrauliques est systématiquement mise en œuvre après la première étape d'actionnement 30 des moyens électriques et est suivie d'une deuxième étape 20 d'actionnement des moyens électriques.

Il sera compris qu'un certain temps peut s'écouler entre la mise en œuvre de la première étape d'actionnement 30 des moyens électriques et la mise en œuvre des étapes 20, 26 d'actionnement des moyens électriques ou des moyens hydrauliques sans sortir du domaine de réalisation de l'invention.

Ainsi, quelles que soient les conditions de fonctionnement du système de freinage, et notamment des moyens électriques d'entrainement, à l'issue de l'étape d'actionnement des moyens électriques, l'effort de serrage du disque de frein est au moins égal à l'effort de serrage nécessaire pour assurer la fonction de frein de parking.

Le véhicule peut donc être immobilisé à tout moment.

Le procédé 10 selon l'invention est avantageusement mis en œuvre sur un véhicule dont les roues sont munies, sur au moins un axe, d'un frein de parking électrique à étrier flottant tel que décrit dans le document FR-1.261.935.

Le procédé selon l'invention est avantageusement mis en œuvre sur un véhicule muni d'une unité hydraulique d'un système ESP comportant une pompe à entraînement électrique et des électrovannes de préférence à commande en largeur d'impulsion (PWM en terminologie anglo-saxonne).

### Nomenclature :

- 10 :: procédé
- 12 :: phase d'initialisation
- 14 :: étape de commande
- 16 :: étape de détermination
- 18 :: lien n° 1
- 20 :: étape d'actionnement des moyens électriques
- 22 :: étape de fin
- 24:: lien n°2
- 26 :: étape d'actionnement des moyens hydrauliques
- 28 :: lien n°3

## Revendications

1. Procédé (10) de commande d'un système de freinage pour véhicule automobile qui est apte à mettre en œuvre une fonction de frein de parking, le système de freinage comportant notamment un disque, un étrier de frein et au moins un piston mobile et qui coopère avec l'étrier pour exercer sur le disque un effort de serrage du disque,
le système de freinage comportant en outre des moyens électriques et des moyens hydrauliques pour l'entrainement du piston afin de produire un effort de serrage du disque,
le procédé (10) comportant une étape (16) de détermination si la puissance que les moyens électriques sont aptes à produire est suffisamment importante pour réaliser un blocage du disque
dans lequel lorsqu'à l'issue de l'étape de détermination (16), il a été déterminé que les moyens électriques sont aptes à produire une puissance suffisamment importante pour réaliser un blocage du disque, l'étape de détermination (16) est suivie d' une étape (20) d'actionnement des seuls moyens électriques pour exercer un effort de serrage du disque,
dans lequel lorsqu'à l'issue de l'étape de détermination (16), il a été déterminé que les moyens électriques ne sont pas aptes à produire une puissance suffisamment importante pour réaliser un blocage du disque, l'étape de détermination (16) est suivie d'une étape (26) d'actionnement des moyens hydrauliques qui consiste à exercer sur le piston un effort de serrage, qui est suivie par une étape (20) d'actionnement des moyens électriques.

2. Procédé (10) selon la revendication 1, **caractérisé en ce que** l'étape de détermination (16) comporte une phase de mesure de l'effort de freinage apte à être exercé à par les moyens électriques d'entrainement.

3. Procédé (10) selon la revendication 1, **caractérisé en ce que** l'étape de détermination (16) comporte une phase de mesure d'une valeur caractéristique d'un circuit d'alimentation électrique du véhicule, circuit incluant la batterie.

4. Procédé selon la revendication 3, **caractérisé en ce que** la valeur électrique mesurée est une tension électrique.

5. Procédé selon la revendication 3, **caractérisé en ce que** la valeur électrique mesurée est une énergie susceptible d'être délivrée aux moyens d'actionnement électrique.

6. Procédé selon la revendication 5, **caractérisé en ce que** la valeur électrique mesurée est une puissance disponible.

7. Procédé selon l'une quelconque des revendications précédentes, **caractérisé en ce qu'**il comporte une étape préliminaire (30) d'actionnement des moyens électriques qui est mise en œuvre avant les étapes (20, 26) d'actionnement des moyens électriques et des moyens hydrauliques.

8. Système de freinage pour véhicule automobile comportant un frein comprenant un piston d'application de plaquette de frein sur un disque, des moyens hydrauliques d'entrainement du piston pour les freinages de service, des moyens électriques d'entrainement du piston pour le freinage de parking, une source délivrant, sur commande, du liquide de frein sous pression audit piston un calculateur de commande et une batterie, assurant, sur commande, l'alimentation électrique des moyens électriques d'entrainement du piston, **caractérisé en ce qu'**il comporte des moyens de détection de la défaillance de la batterie, et des moyens de commande d'activation des moyens hydrauliques suivis par une activation des moyens électriques d'entrainement du piston lors de l'activation du frein de parking, et **en ce qu'**il est configuré pour mettre en œuvre le procédé selon la revendication 1.

## Patentansprüche

1. Verfahren (10) zur Steuerung eines Bremssystems für ein Kraftfahrzeug, das geeignet ist, eine Feststellbremsfunktion durchzuführen, wobei das Bremssystem insbesondere eine Scheibe, einen Bremssattel und mindestens einen beweglichen Kolben aufweist, und der mit dem Sattel zusammenwirkt, um auf die Scheibe eine Kraft zum Klemmen der Scheibe auszuüben, wobei das Bremssystem ferner elektrische Mittel und hydraulische Mittel zum Antrieb des Kolbens aufweist, um eine Kraft zum Klemmen der Scheibe zu erzeugen,
wobei das Verfahren (10) einen Schritt (16) des Bestimmens aufweist, ob die Leistung, die die elektrischen Mittel zu erzeugen geeignet sind, hoch genug ist, um eine Blockierung der Scheibe durchzuführen
wobei, wenn am Ende des Schritts des Bestimmens (16) bestimmt wurde, dass die elektrischen Mittel geeignet sind, eine Leistung zu erzeugen, die hoch genug ist, um eine Blockierung der Scheibe durchzuführen, auf den Schritt des Bestimmens (16) ein Schritt des Betätigens (20) nur der elektrischen Mittel folgt, um eine Kraft zum Klemmen der Scheibe auszuüben,
wobei, wenn am Ende des Schritts des Bestimmens (16) bestimmt wurde, dass die elektrischen Mittel nicht geeignet sind, eine Leistung zu erzeugen, die hoch genug ist, um eine Blockierung der Scheibe durchzuführen, auf den Schritt des Bestimmens (16) ein Schritt des Betätigens (26) der hydraulischen Mittel folgt, der darin besteht, auf den Kolben eine Klemmkraft auszuüben, auf den ein Schritt (20) des Betätigens der elektrischen Mittel folgt.

2. Verfahren (10) nach Anspruch 1, **dadurch gekennzeichnet, dass** der Schritt des Bestimmens (16) eine Phase des Messens der Bremskraft aufweist, die durch die elektrischen Antriebsmittel ausgeübt werden kann.

3. Verfahren (10) nach Anspruch 1, **dadurch gekennzeichnet, dass** der Schritt des Bestimmens (16) eine Phase des Messens eines charakteristischen Werts einer Stromversorgungsschaltung des Fahrzeugs aufweist, wobei die Schaltung die Batterie enthält.

4. Verfahren nach Anspruch 3, **dadurch gekennzeichnet, dass** der gemessene elektrische Wert eine elektrische Spannung ist.

5. Verfahren nach Anspruch 3, **dadurch gekennzeichnet, dass** der gemessene elektrische Wert eine Energie ist, die an die elektrischen Betätigungsmittel geliefert werden kann.

6. Verfahren nach Anspruch 5, **dadurch gekennzeichnet, dass** der gemessene elektrische Wert eine verfügbare Leistung ist.

7. Verfahren nach einem der vorhergehenden Ansprüche, **dadurch gekennzeichnet, dass** es einen vorausgehenden Schritt (30) des Betätigens der elektrischen Mittel aufweist, der vor den Schritten (20, 26) des Betätigens der elektrischen Mittel und der hydraulischen Mittel durchgeführt wird.

8. Bremssystem für ein Kraftfahrzeug, das eine Bremse aufweist, die einen Kolben zur Bremsbelagaufbringung auf eine Scheibe, hydraulische Mittel zum Antrieb des Kolbens für Betriebsbremsungen, elektrische Mittel zum Antrieb des Kolbens für die Feststellbremsung, eine Quelle, die auf Anforderung unter Druck stehende Bremsflüssigkeit an den Kolben liefert, einen Steuerungsrechner und eine Batterie, die auf Anforderung die Stromversorgung der elektrischen Antriebsmittel des Kolbens sicherstellt, umfasst, **dadurch gekennzeichnet, dass** es Mittel zur Detektion des Ausfalls der Batterie und Mittel zur Aktivierungssteuerung der hydraulischen Mittel gefolgt von einer Aktivierung der elektrischen Antriebsmittel des Kolbens bei der Aktivierung der Feststellbremse aufweist.

## Claims

1. A method (10) for controlling a braking system for an automobile vehicle which is able to implement a parking brake function, the braking system including in particular a disk, a brake calliper and at least one movable piston and which cooperates with the calliper to exert on the disk a disk clamping force,
the braking system further including electric means and hydraulic means for driving the piston in order to produce a disk clamping force,
the method (10) including a step (16) of determining whether the power which the electric means are able to produce is high enough to perform a disk locking,
wherein when at the end of the determining step (16), it has been determined that the electric means are able to exert a high enough force to perform a disk locking, the determining step (16) is followed by a step (20) of actuating the electric means only to exert a disk clamping force,
wherein when at the end of the determining step (16), it has been determined that the electric means are not able to exert a high enough force to perform a disk locking, the determining step (16) is followed by a step (26) of actuating the hydraulic means which consists in exerting on the piston a clamping force, which is followed by the step (20) of actuating the electric means.

2. The method (10) of claim 1, **characterised in that** the determining step (16) includes a phase of measuring the braking force able to be exerted by the driving electric means.

3. The method (10) according to claim 1, **characterised in that** the determining step (16) includes a phase of measuring a characteristic value of a circuit for electrically supplying the vehicle, which circuit includes the battery.

4. The method according to claim 3, **characterised in that** the electric value measured is a voltage.

5. The method according to claim 3, **characterised in that** the electric value measured is an energy likely to be delivered to the electric actuating means.

6. The method according to claim 5, **characterised in that** the electric value measured is an available power.

7. The method according to any of the preceding claims, **characterised in that** it includes a prior step (30) of actuating the electric means which is implemented before the steps (20, 26) of actuating the electric means and the hydraulic means.

8. A braking system for an automobile vehicle including a brake comprising a piston for applying a brake pad to a disk, hydraulic means for driving the piston for service brakings, electric means for driving the piston for parking braking, a source delivering, to order, pressurised brake fluid to said piston, a control calculator and a battery, ensuring, to order, the electric supply of the electric means for driving the piston, **characterised in that** it includes battery failure detecting means, and control means for activating the hydraulic means followed by activating the electric means for driving the piston upon activating the parking brake, and **in that** it is configured to implement the method according to claim 1.
